# EUROPEAN PATENT SPECIFICATION

(11) **EP 3 197 183 B1**
(45) Date of publication and mention of the grant of the patent: **26.12.2018**
(21) Application number: 15841869.9
(22) Date of filing: 09.04.2015
(51) Int. Cl.: H04W 4/00, H04W 4/02, H04L 29/12, H04L 29/08, H04W 4/70, H04W 76/25

(54) **METHOD FOR MANAGING APPLICATION RESOURCES AND REGISTERED NODE IN M2M**
VERFAHREN ZUR VERWALTUNG VON ANWENDUNGSRESSOURCEN UND REGISTRIERTEN KNOTEN IN M2M
PROCÉDÉ DE GESTION DE RESSOURCES APPLICATIVES ET D'UN NOEUD ENREGISTRÉ DANS LA M2M

(30) Priority: 19.09.2014 CN 201410484261
(43) Date of publication of application: 26.07.2017
(73) Proprietor: ZTE Corporation, Shenzhen, Guangdong 518057 (CN)
(72) Inventor: WU, Hao, Shenzhen Guangdong 518057 (CN)
(74) Representative: Novagraaf Technologies
(86) International application number: PCT/CN2015/076189
(87) International publication number: WO 2016/041343

(56) References cited:
- CN-A- 103 299 601
- CN-A- 103 618 800
- US-A1- 2011 200 052
- HUAWEI TECHNOLOGIES CO LTD ET AL: "merge-nodeInfo-and-node", ARC-2014-1417R01-MERGE-NODEINFO-AND-NODE.D OC, ONEM2M , vol. WG2 - Architecture, ARC 10 June 2014 (2014-06-10), pages 1-13, XP084006422, Retrieved from the Internet: URL:URL = http://member.onem2m.org/Application/docum entapp/downloadimmediate/default.aspx?docI D=6613 [retrieved on 2014-06-10]
- RAJESH BHALLA ET AL: "This document specifies the functional architecture for the oneM2M Services Platform. This version of the document is an update over TS-0001v0.6.1. It incorporates editorial cleanup of the document by the Secretariat including update of the pictures for the resources in clause 9.6 and in Annex D", ARC-2014-1394-TS-0001-FUNCTIONAL_ARCHITECT URE-V0_7_0.ZIP, ONEM2M , vol. WG2 - Architecture, ARC 23 May 2014 (2014-05-23), pages 1-326, XP084006145, Retrieved from the Internet: URL:URL = http://member.onem2m.org/Application/docum entapp/downloadimmediate/default.aspx?docI D=6305 [retrieved on 2014-05-23]

## Description

### Technical Field

The present disclosure relates to M2M communications, and more particularly to a method and registration node for managing an application resource in M2M.

### Background

An M2M communication network consists of M2M nodes and a bearer network. The M2M nodes implement mutual communication through the bearer network. An M2M node at least includes an Application Entity (AE) or a Common Service Entity (CSE). The AE is a logical unit for executing M2M applications. The CSE is a logical unit for managing and serving M2M applications.

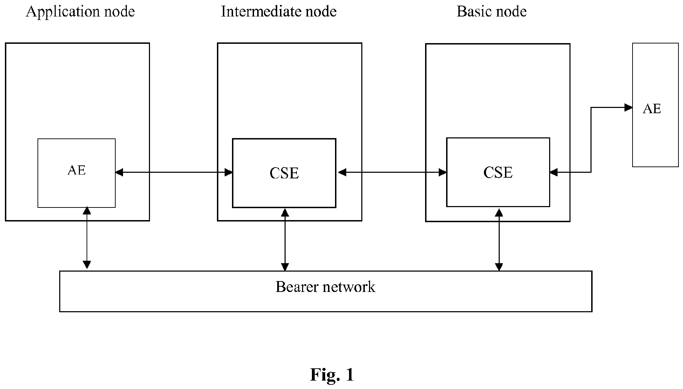

Fig. 1 is a structure diagram of an M2M communication network according to a related technology. In the figure, the M2M nodes include an application node including an AE, an intermediate node including a CSE and a basic node including a CSE. The application node is an end execution node, such as an intelligent electric meter, a temperature measurement and control sensor, a fire alarm and an intelligent home appliance. The intermediate node is middleware which connects the end execution nodes to a network-side server, such as a gateway. The basic node is a server at the network side, and an application registered on the basic node may be a management platform of an M2M service provider.

Communication between M2M applications is implemented by interaction between the CSE. In order to achieve the interaction, the AE on the application node is required to initiate registration to the CSE of the intermediate node, and the CSE of the intermediate node is required to initiate registration to the CSE of the basic node. The CSE on the intermediate node is called as a local CSE or registration CSE of the AE on the application node. The CSE on the basic node is called as a local CSE or registration CSE of the CSE on the intermediate node.

In the related technology, when the registration CSE of the AE on the application node and the registration CSE of the CSE on the intermediate node respectively manage an AE resource on the application node and a CSE resource on the intermediate node, the application node bearing the AE resource and the intermediate node bearing the CSE resource are not considered.

In addition, when the application node and the intermediate node are replaced and replacing application node and intermediate node run the same applications as the replaced application node and intermediate node, running data of the applications on the replaced application node and intermediate node is usually expected to be reserved. However, the registration CSE of the AE on the application node may delete locally stored AE resource after learning about the deletion of the application node. Similarly, in the related technology, the registration CSE of the CSE on the intermediate node may delete locally stored CSE resource on the intermediate node after learning about the deletion of the intermediate node. Therefore, after a node replacement operation is executed, the replacing application node and intermediate node are required to initiate registration to the CSEs and create corresponding resources again when being started. As a result, not only may earlier application data be lost, but also a repeated resource creation process may influence working efficiency of M2M.

The publication of HUAWEI TECHNOLOGIES CO LTD ET AL "merge-nodeInfo-and-node", in ARC-2014-1417801-MERGE-NODEINFO-AND-NODE.DOC, ONEM2M vol. WG2-Architecture, ARC, no. conference=ARC 11.0, 20140609-20140613, CHINA, Xi'an China 10 June 2014 (2014-06-10), pages 1-13" and the publication of RAJESH BHALLA ET AL: "This document specifies the functional architecture for the oneM2M Services Platform. This version of the document is an update over TS-0001v0.6.1.It incorporates editorial cleanup of the document by the Secretariat including update of the pictures for the resources in clause 9.6 and in Annex D", in ARC-2014-1394-TS-0001-FUNCTIONAL ARCHITECTURE-VO 7 O.ZIP ONEM2M vol. WG2-Architecture, ARC, no. conference=ARC 11.0, 20140609- 20140613, CHINA, Xi'an China 23 May 2014 (2014-05-23), pages 1-326 XP084006145," provide the related technical solutions. However, the above mentioned problem still remains unsolved.

### Summary

Embodiments of the present disclosure provide a method and registration node for managing an application resource in M2M, so as to solve the technical problem of how to associate an AE resource with a node to which the AE resource belongs and associate a CSE resource with a node to which the CSE resource belongs on registration CSEs.

The invention is related to a method according to claim 1, a registration node according to claim 6 and a computer storage medium according to claim 11. Further embodiments of the invention are defined by the dependent claims.

In the technical solutions, the registration CSE creates the node resource for the node where the AE or the CSE is located, and establishes the association relationship between the AE resource and the created node resource, or establishes the association relationship between the CSE resource and the created node resource. By virtue of the technical solution, a purpose of associating the AE resource with the node to which the AE resource belongs and associating the CSE resource with the node to which the CSE resource belongs on the registration CSE can be achieved. In addition, in the technical solutions, when the node where the AE or the CSE is located is replaced, the AE resource or CSE resource stored in the registration CSE is not deleted, and instead, the association relationship between the replacing node and the AE resource or the CSE resource is established, so that the replacing node may continue using the AE resource or CSE resource before node replacement. In this way, the problem of running data loss under the condition that the application node and/or the intermediate node are/is replaced and the replacing nodes/node are/is expected to reserve running data of the replaced nodes/node is solved.

### Brief Description of the Drawings

Fig. 1 is a structure diagram of an M2M communication network according to the related technology;
Fig. 2 is a flowchart of a method for managing an application resource according to an embodiment; and
Fig. 3 is a module diagram of a registration node for managing an application resource according to an embodiment.

### Detailed Description of the Embodiments

The embodiments of the present disclosure will be described below with reference to the drawings in detail. It is important to note that the embodiments in the present disclosure and characteristics in the embodiments may be freely combined under the condition of no conflicts.

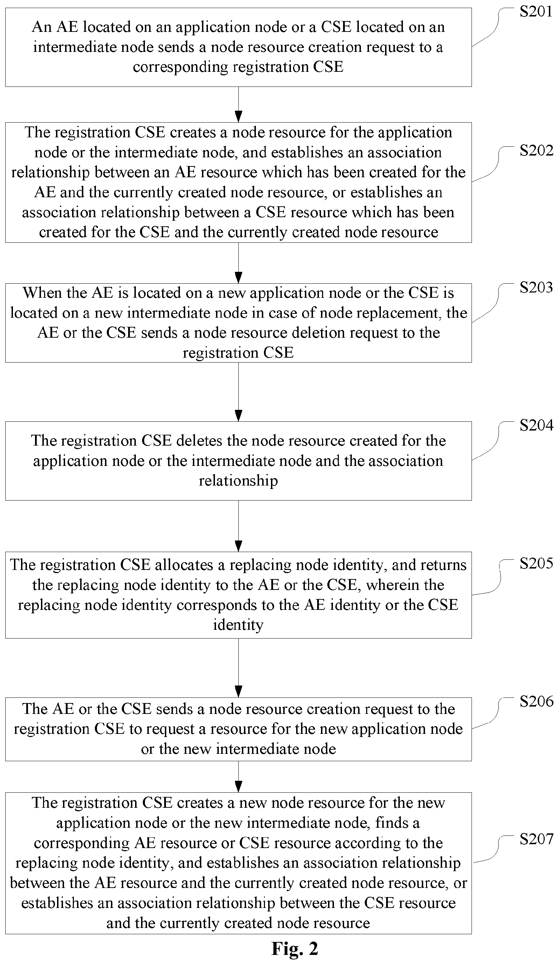

Fig. 2 is a flowchart of a method for managing an application resource according to an embodiment. The method may include the following steps.

In a step of S201, an AE located on an application node or a CSE located on an intermediate node sends a node resource creation request to a corresponding registration CSE to request a resource for the application node where the AE is located or the intermediate node where the CSE is located.

The node resource creation request includes: an AE identity of the AE or a CSE identity of the CSE, a node identity and a type of the resource to be created. The type of the resource to be created may be a node type.

In a step of S202, the registration CSE creates a node resource for the application node or the intermediate node, and establishes an association relationship between an AE resource which has been created for the AE and the currently created node resource, or establishes an association relationship between a CSE resource which has been created for the CSE and the currently created node resource.

An attribute of the AE resource includes the AE identity, and an attribute of the CSE resource includes the CSE identity.

The registration CSE creates a resource of the node type after receiving the resource creation request. A "node identity" attribute may be set for the node resource, and an attribute value of the "node identity" attribute is the node identity carried in the resource creation request.

In an exemplary embodiment, the step that the registration CSE establishes the association relationship between the AE resource and the currently created node resource includes that:
the association relationship between the AE resource of which the attribute includes the AE identity and the currently created node resource is established.

In an exemplary embodiment, the step that the registration CSE establishes the association relationship between the CSE resource and the currently created node resource includes that:
the association relationship between the CSE resource of which the attribute includes the CSE identity and the currently created node resource is established.

In an exemplary embodiment, the step that the registration CSE establishes the association relationship between the AE resource and the currently created node resource includes that:
a value of a "node connection" attribute of the AE resource is set to be the node identity or an address of the currently created node resource.

In an exemplary embodiment, the step that the registration CSE establishes the association relationship between the CSE resource and the currently created node resource includes that:
a value of a "node connection" attribute of the CSE resource is set to be the node identity or an address of the currently created node resource.

In a step of S203, when the AE is located on a new application node or the CSE is located on a new intermediate node in case of node replacement, the AE or the CSE sends a node resource deletion request to the registration CSE.

The node resource deletion request includes: a node replacement indication, the AE or CSE identity and the address of the replaced node resource.

In a step of S204, the registration CSE deletes the node resource created for the application node or the intermediate node and the association relationship.

The registration CSE finds the node resource to be deleted according to the address of the replaced node resource.

In an exemplary embodiment, the step that the registration CSE deletes the established association relationship includes that:
the node connection attribute of the AE or CSE resource is deleted, or, the value of the node connection attribute of the AE or CSE resource is set to be null.

In a step of S205, the registration CSE allocates a replacing node identity, and returns the replacing node identity to the AE or the CSE. The replacing node identity corresponds to the AE identity or the CSE identity.

In a step of S206, the AE or the CSE sends a node resource creation request to the registration CSE to request a resource for the new application node or the new intermediate node.

The node resource creation request includes: the replacing node identity, the node identity and the type of the resource to be created.

In a step of S207, the registration CSE creates a new node resource for the new application node or the new intermediate node, finds a corresponding AE resource or CSE resource according to the replacing node identity, and establishes an association relationship between the AE resource and the currently created node resource, or establishes an association relationship between the CSE resource and the currently created node resource.

In the technical solution, the registration CSE creates the node resource for the node where the AE or the CSE is located, and establishes the association relationship between the AE resource and the created node resource, or establishes the association relationship between the CSE resource and the created node resource. By virtue of the technical solution, a purpose of associating the AE resource with the node to which the AE resource belongs and associating the CSE resource with the node to which the CSE resource belongs on the registration CSE can be achieved. In addition, in the technical solution, when the node where the AE or the CSE is located is replaced, the AE resource or CSE resource stored in the registration CSE is not deleted, and instead, the association relationship between the replacing node and the AE resource or the CSE resource is established, so that the replacing node may continue using the AE resource or CSE resource before node replacement. In this way, the problem of running data loss under the condition that the application node and/or the intermediate node are/is replaced and the replacing nodes/node are/is expected to reserve running data of the replaced nodes/node is solved.

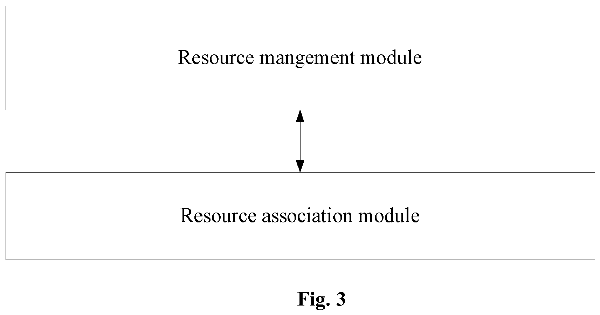

Fig. 3 is a module diagram of a registration node for managing an application resource according to an embodiment.

The registration node includes: a resource management module and a resource association module.

The resource management module is arranged to, after receiving node resource creation request sent by an AE or a CSE, create a node resource for an application node where the AE is located or an intermediate node where the CSE is located.

The node resource creation request includes: an AE identity of the AE or a CSE identity of the CSE, a node identity and a type of the resource to be created. The type of the resource to be created may be a node type.

The resource association module is arranged to establish an association relationship between an AE resource which has been created for the AE and the currently created node resource, or establish an association relationship between a CSE resource which has been created for the CSE and the currently created node resource. An attribute of the AE resource includes the AE identity, and an attribute of the CSE resource includes the CSE identity.

In an exemplary embodiment, the resource association module is arranged to establish the association relationship between the AE resource which has been created for the AE and the currently created node resource in the following manner:
establishing the association relationship between the AE resource of which the attribute includes the AE identity and the currently created node resource.

In an exemplary embodiment, the resource association module is arranged to establish the association relationship between the CSE resource which has been created for the CSE and the currently created node resource in the following manner:
establishing the association relationship between the CSE resource of which the attribute includes the CSE identity and the node resource.

In an exemplary embodiment, the resource association module is arranged to establish the association relationship between the AE resource which has been created for the AE and the currently created node resource in the following manner:
setting a value of a "node connection" attribute of the AE resource to be the node identity or an address of the currently created node resource.

In an exemplary embodiment, the resource association module is arranged to establish the association relationship between the CSE resource and the currently created node resource in the following manner:
setting a value of a "node connection" attribute of the CSE resource to be the node identity or an address of the currently created node resource.

The resource management module is further arranged to, when receiving a node resource deletion request from the AE or the CSE after receiving the node resource creation request sent by the AE or the CSE, delete the node resource created for the application node or the intermediate node and the association relationship. The node resource deletion request includes a node replacement indication, the AE identity or the CSE identity.

In an exemplary embodiment, the resource management module is arranged to delete association relationship in the following manner:
deleting the node connection attribute of the AE or CSE resource, or, setting a value of the node connection attribute of the AE or CSE resource to be null.

The resource management module, besides being arranged to delete the node resource created for the application node or the intermediate node and the association relationship, is further arranged to allocate a replacing node identity to the AE or the CSE, and return the replacing node identity to the AE or the CSE. The replacing node identity corresponds to the AE identity or the CSE identity.

The resource management module is further arranged to, when receiving a node resource creation request of requesting a resource for a new application node or a new intermediate node from the AE or the CSE after returning the replacing node identity to the AE or the CSE, create a new node resource for the new application node or the new intermediate node, and find a corresponding AE resource or CSE resource according to the replacing node identity.

The node resource creation request of requesting the resource for the new application node or the new intermediate node includes: the AE identity or the CSE identity, the node identity and the type of the resource to be created.

In the technical solution, the registration CSE creates the node resource for the node where the AE or the CSE is located, and establishes the association relationship between the AE resource and the created node resource, or establishes the association relationship between the CSE resource and the created node resource. By virtue of the technical solution, a purpose of associating the AE resource with the node to which the AE resource belongs and associating the CSE resource with the node to which the CSE resource belongs on the registration CSE can be achieved. In addition, in the technical solution, when the node where the AE or the CSE is located is replaced, the AE resource or CSE resource stored in the registration CSE is not deleted, and instead, the association relationship between the replacing node and the AE resource or the CSE resource is established, so that the replacing node may continue using the AE resource or CSE resource before node replacement. In this way, the problem of running data loss under the condition that the application node and/or the intermediate node are/is replaced and the replacing nodes/node are/is expected to reserve running data of the replaced nodes/node is solved.

Those skilled in the art should know that all or part of the steps in the method may be implemented by related hardware instructed by a program, and the program may be stored in a computer-readable storage medium, such as a read-only memory, a magnetic disk or an optical disk. Alternatively, all or part of the steps of the embodiments may also be implemented by virtue of one or more integrated circuits, and correspondingly, each module/unit in the embodiments may be implemented by adopting a hardware form, and may also be implemented by adopting a software function module form. The present disclosure is not limited to a hardware and software combination in any specific form.

### Industrial Applicability

In the above technical solutions, the purpose of associating the AE resource with the node to which the AE resource belongs and associating the CSE resource with the node to which the CSE resource belongs on the registration CSE is achieved. In addition, in the technical solutions, when the node where the AE or the CSE is located is replaced, the AE resource or CSE resource stored in the registration CSE is not deleted, and instead, the association relationship between the replacing node and the AE resource or the CSE resource is established, so that the replacing node may continue using the AE resource or CSE resource before node replacement. In this way, the problem of running data loss under the condition that the application node and/or the intermediate node are/is replaced and the replacing nodes/node are/is expected to reserve running data of the replaced nodes/node is solved.

## Claims

1. A method for managing an application resource, comprising:
sending, by an Application Entity, AE, or a Common Service Entity, CSE, a node resource creation request to a registration CSE of the AE or CSE to request a resource for an application node where the AE is located or an intermediate node where the CSE is located, wherein the node resource creation request comprises an AE identity of the AE or a CSE identity of the CSE, a node identity and a type of the resource to be created (S201); and
creating, by the registration CSE, a node resource for the application node or the intermediate node, **characterized in that** the method further comprises: establishing, by the registration CSE, an association relationship between an AE resource which has been created for the AE and the currently created node resource, or establishing, by the registration CSE, an association relationship between a CSE resource which has been created for the CSE and the currently created node resource, wherein an attribute of the AE resource comprises the AE identity and an attribute of the CSE resource comprises the CSE identity (S202);
wherein establishing the association relationship between the AE resource and the currently created node resource (S202, S207) comprises: setting a value of a "node connection" attribute of the AE resource to be the node identity or an address of the currently created node resource; and
establishing the association relationship between the CSE resource and the currently created node resource (S202, S207) comprises: setting a value of a "node connection" attribute of the CSE resource to be the node identity or an address of the currently created node resource.

2. The method as claimed in claim 1, further comprising:
after sending, by the AE or the CSE, the node resource creation request to the registration CSE to request the resource for the application node or the intermediate node, when the AE is located on a new application node or the CSE is located on a new intermediate node in case of node replacement, sending, by the AE or the CSE, a node resource deletion request to the registration CSE (S203); and
deleting, by the registration CSE, the node resource created for the application node or the intermediate node and the association relationship (S204);
wherein deleting, by the registration CSE, the association relationship (S204) comprises: deleting a "node connection" attribute of the AE resource or the CSE resource, or, setting a value of the "node connection" attribute of the AE resource or the CSE resource to be null.

3. The method as claimed in claim 2, wherein
the node resource deletion request comprises a node replacement indication, the AE identity or the CSE identity; and
the method further comprises:
besides deleting the node resource created for the application node or the intermediate node and the association relationship (S204), further allocating, by the registration CSE, a replacing node identity to the AE or the CSE, and returning, by the registration CSE, the replacing node identity to the AE or the CSE, wherein the replacing node identity corresponds to the AE identity or the CSE identity (S205).

4. The method as claimed in claim 3, further comprising:
after returning, by the registration CSE, the replacing node identity to the AE or the CSE (S205), sending, by the AE or the CSE, a node resource creation request to the registration CSE to request a resource for the new application node or the new intermediate node, wherein the node resource creation request comprises the replacing node identity, the node identity and the type of the resource to be created (S206); and
creating, by the registration CSE, a new node resource for the new application node or the new intermediate node, finding, by the registration CSE, a corresponding AE resource or CSE resource according to the replacing node identity, and establishing, by the registration CSE, an association relationship between the AE resource and the currently created node resource, or establishing, by the registration CSE, an association relationship between the CSE resource and the currently created node resource (S207).

5. The method as claimed in any one of claims 1 to 4, wherein
establishing the association relationship between the AE resource and the currently created node resource (S202, S207) comprises:
establishing the association relationship between the AE resource of which the attribute comprises the AE identity and the currently created node resource; and
establishing the association relationship between the CSE resource and the currently created node resource (S202, S207) comprises:
establishing the association relationship between the CSE resource of which the attribute comprises the CSE identity and the currently created node resource.

6. A registration node for managing an application resource, comprising: a resource management module and a resource association module, wherein
the resource management module is arranged to, after receiving a node resource creation request sent by an Application Entity, AE, or a Common Service Entity, CSE, create a node resource for an application node where the AE is located or an intermediate node where the CSE is located, wherein the node resource creation request comprises an AE identity of the AE or a CSE identity of the CSE, a node identity and a type of the resource to be created; **characterized in that** the resource association module is arranged to establish an association relationship between an AE resource which has been created for the AE and the currently created node resource, or establish an association relationship between a CSE resource which has been created for the CSE and the currently created node resource, wherein an attribute of the AE resource comprises the AE identity and an attribute of the CSE resource comprises the CSE identity;
wherein the resource association module is arranged to establish the association relationship between the AE resource which has been created for the AE and the currently created node resource in the following manner: setting a value of a "node connection" attribute of the AE resource to be the node identity or an address of the currently created node resource; and
the resource association module is arranged to establish the association relationship between the CSE resource and the currently created node resource in the following manner: setting a value of a "node connection" attribute of the CSE resource to be the node identity or an address of the currently created node resource.

7. The registration node as claimed in claim 6, wherein
the resource management module is further arranged to, when receiving a node resource deletion request from the AE or the CSE after receiving the node resource creation request sent by the AE or the CSE, delete the node resource created for the application node or the intermediate node and the association relationship;
wherein the resource management module is arranged to delete the association relationship in the following manner: deleting a "node connection" attribute of the AE resource or the CSE resource, or, setting a value of the "node connection" attribute of the AE resource or the CSE resource to be null.

8. The registration node as claimed in claim 7, wherein
the node resource deletion request comprises a node replacement indication, the AE identity or the CSE identity; and
the resource management module is further arranged to allocate a replacing node identity to the AE or the CSE, and return the replacing node identity to the AE or the CSE, wherein the replacing node identity corresponds to the AE identity or the CSE identity.

9. The registration node as claimed in claim 8, wherein
the resource management module is further arranged to, when receiving a node resource creation request of requesting a resource for a new application node or a new intermediate node from the AE or the CSE after returning the replacing node identity to the AE or the CSE, create a new node resource for the new application node or the new intermediate node, and find a corresponding AE resource or CSE resource according to the replacing node identity, wherein the node resource creation request comprises the replacing node identity, the node identity and the type of the resource to be created.

10. The registration node as claimed in any one of claims 6 to 9, wherein
the resource association module is arranged to establish the association relationship between the AE resource which has been created for the AE and the currently created node resource in the following manner:
establishing the association relationship between the AE resource of which the attribute comprises the AE identity and the currently created node resource; and
the resource association module is arranged to establish the association relationship between the CSE resource which has been created for the CSE and the currently created node resource in the following manner:
establishing the association relationship between the CSE resource of which the attribute comprises the CSE identity and the currently created node resource.

11. A computer storage medium, in which a computer-executable instruction is stored, the computer-executable instruction being arranged to execute the method as claimed in any one of claims 1-5.

## Patentansprüche

1. Verfahren zum Verwalten einer Anwendungsressource, umfassend:
Senden, durch eine Application Entity, AE, oder eine Common Service Entity, CSE, einer Knotenressourcen-Erstellungsanfrage an eine Registrierungs-CSE der AE oder CSE, um eine Ressource für einen Anwendungsknoten anzufragen, bei dem die AE angesiedelt ist, oder einen Zwischenknoten, bei dem die CSE angesiedelt ist, wobei die Knotenressourcen-Erstellungsanfrage eine AE-Identität der AE oder eine CSE-Identität der CSE, eine Knotenidentität und einen Typ der Ressource, die erstellt werden soll, umfasst (S201); und
Erstellen, durch die Registrierungs-CSE, einer Knotenressource für den Anwendungsknoten oder den Zwischenknoten, **dadurch gekennzeichnet, dass** das Verfahren weiter umfasst:
Herstellen, durch die Registrierungs-CSE, einer Zuordnungsbeziehung zwischen einer AE-Ressource, die für die AE erstellt wurde, und der aktuell erstellten Knotenressource, oder Herstellen, durch die Registrierungs-CSE, einer Zuordnungsbeziehung zwischen einer CSE-Ressource, die für die CSE erstellt wurde, und der aktuell erstellten Knotenressource, wobei ein Attribut der AE-Ressource die AE-Identität umfasst, und ein Attribut der CSE-Ressource die CSE-Identität umfasst (S202);
wobei das Herstellen der Zuordnungsbeziehung zwischen der AE-Ressource und der aktuell erstellten Knotenressource (S202, S207) umfasst: Einstellen eines Werts eines "Knotenverbindungs"-Attributs der AE-Ressource so, dass er die Knotenidentität oder eine Adresse der aktuell erstellten Knotenressource ist; und
das Herstellen der Zuordnungsbeziehung zwischen der CSE-Ressource und der aktuell erstellten Knotenressource (S202, S207) umfasst: Einstellen eines Werts eines "Knotenverbindungs"-Attributs der CSE-Ressource so, dass er die Knotenidentität oder eine Adresse der aktuell erstellten Knotenressource ist.

2. Verfahren nach Anspruch 1, weiter umfassend:
nach dem Senden, durch die AE oder die CSE, der Knotenressourcen-Erstellungsanfrage an die Registrierungs-CSE, um die Ressource für den Anwendungsknoten oder den Zwischenknoten anzufragen, wenn im Falle von Knotenersatz die AE an einem neuen Anwendungsknoten angesiedelt ist oder die CSE an einem neuen Zwischenknoten angesiedelt ist, Senden, durch die AE oder die CSE, einer Knotenressourcen-Löschanfrage an die Registrierungs-CSE (S203); und
Löschen, durch die Registrierungs-CSE, der für den Anwendungsknoten oder den Zwischenknoten erstellten Knotenressource und der Zuordnungsbeziehung (S204);
wobei das Löschen, durch die Registrierungs-CSE, der Zuordnungsbeziehung (S204) umfasst: Löschen eines "Knotenverbindungs"-Attributs der AE-Ressource oder der CSE-Ressource, oder Einstellen eines Werts des "Knotenverbindungs"-Attributs der AE-Ressource oder der CSE-Ressource so, dass er Null ist.

3. Verfahren nach Anspruch 2, wobei
die Knotenressourcen-Löschanfrage einen Knotenersatzhinweis, die AE-Identität oder die CSE-Identität umfasst; und
das Verfahren weiter umfasst:
neben dem Löschen der für den Anwendungsknoten oder den Zwischenknoten erstellten Knotenressource und der Zuordnungsbeziehung (S204), weiter Zuweisen, durch die Registrierungs-CSE, einer Ersatz-Knotenidentität an die AE oder die CSE, und Zurückgeben, durch die Registrierungs-CSE, der Ersatz-Knotenidentität an die AE oder die CSE, wobei die Ersatz-Knotenidentität der AE-Identität oder der CSE-Identität entspricht (S205).

4. Verfahren nach Anspruch 3, weiter umfassend:
nach dem Zurückgeben, durch die Registrierungs-CSE, der Ersatz-Knotenidentität an die AE oder die CSE (S205), Senden, durch die AE oder die CSE, einer Knotenressourcen-Erstellungsanfrage an die Registrierungs-CSE, um eine Ressource für den neuen Anwendungsknoten oder den neuen Zwischenknoten anzufragen, wobei die Knotenressourcen-Erstellungsanfrage die Ersatz-Knotenidentität, die Knotenidentität und dem Typ der Ressource, die erstellt werden soll, umfasst (S206); und
Erstellen, durch die Registrierungs-CSE, einer neuen Knotenressource für den neuen Anwendungsknoten oder den neuen Zwischenknoten, Finden, durch die Registrierungs-CSE, einer entsprechenden AE-Ressource oder CSE-Ressource gemäß der Ersatz-Knotenidentität, und Herstellen, durch die Registrierungs-CSE, einer Zuordnungsbeziehung zwischen der AE-Ressource und der aktuell erstellten Knotenressource, oder Herstellen, durch die Registrierungs-CSE, einer Zuordnungsbeziehung zwischen der CSE-Ressource und der aktuell erstellten Knotenressource (S207).

5. Verfahren nach einem der Ansprüche 1 bis 4, wobei das Herstellen der Zuordnungsbeziehung zwischen der AE-Ressource und der aktuell erstellten Knotenressource (S202, S207) umfasst:
Herstellen der Zuordnungsbeziehung zwischen der AE-Ressource, deren Attribut die AE-Identität umfasst, und der aktuell erstellten Knotenressource; und
das Herstellen der Zuordnungsbeziehung zwischen der CSE-Ressource und der aktuell erstellten Knotenressource (S202, S207) umfasst:
Herstellen der Zuordnungsbeziehung zwischen der CSE-Ressource, deren Attribut die CSE-Identität umfasst, und der aktuell erstellten Knotenressource.

6. Registrierungsknoten zum Verwalten einer Anwendungsressource, umfassend: ein Ressourcenverwaltungsmodul und ein Ressourcenzuordnungsmodul, wobei
das Ressourcenverwaltungsmodul dazu eingerichtet ist, nach Empfangen einer Knotenressourcen-Erstellungsanfrage, die von einer Application Entity, AE, oder einer Common Service Entity, CSE, gesendet wird, eine Knotenressource für einen Anwendungsknoten, bei dem die AE angesiedelt ist, oder einen Zwischenknoten, bei dem die CSE angesiedelt ist, zu erstellen, wobei die Knotenressourcen-Erstellungsanfrage eine AE-Identität der AE oder eine CSE-Identität der CSE, eine Knotenidentität und einen Typ der Ressource, die erstellt werden soll, umfasst; **dadurch gekennzeichnet, dass**
das Ressourcenzuordnungsmodul dazu eingerichtet ist, eine Zuordnungsbeziehung zwischen einer AE-Ressource, die für die AE erstellt wurde, und der aktuell erstellten Knotenressource herzustellen, oder eine Zuordnungsbeziehung zwischen einer CSE-Ressource, die für die CSE erstellt wurde, und der aktuell erstellten Knotenressource herzustellen, wobei ein Attribut der AE-Ressource die AE-Identität umfasst, und ein Attribut der CSE-Ressource die CSE-Identität umfasst;
wobei das Ressourcenzuordnungsmodul dazu eingerichtet ist, die Zuordnungsbeziehung zwischen der AE-Ressource, die für die AE erstellt wurde, und der aktuell erstellten Knotenressource in der folgenden Weise herzustellen: Einstellen eines Werts eines "Knotenverbindungs"-Attributs der AE-Ressource so, dass er die Knotenidentität oder eine Adresse der aktuell erstellten Knotenressource ist; und
das Ressourcenzuordnungsmodul dazu eingerichtet ist, die Zuordnungsbeziehung zwischen der CSE-Ressource und der aktuell erstellten Knotenressource in der folgenden Weise herzustellen: Einstellen eines Werts eines "Knotenverbindungs"-Attributs der CSE-Ressource so, dass er die Knotenidentität oder eine Adresse der aktuell erstellten Knotenressource ist.

7. Registrierungsknoten nach Anspruch 6, wobei
das Ressourcenverwaltungsmodul weiter dazu eingerichtet ist, wenn es eine Knotenressourcen-Löschanfrage von der AE oder der CSE empfängt, nach Empfangen der von der AE oder der CSE gesendeten Knotenressourcen-Erstellungsanfrage die für den Anwendungsknoten oder den Zwischenknoten erstellte Knotenressource und die Zuordnungsbeziehung zu löschen;
wobei das Ressourcenverwaltungsmodul dazu eingerichtet ist, die Zuordnungsbeziehung in der folgenden Weise zu löschen: Löschen eines "Knotenverbindungs"-Attributs der AE-Ressource oder der CSE-Ressource, oder Einstellen eines Werts des "Knotenverbindungs"-Attributs der AE-Ressource oder der CSE-Ressource so, dass er Null ist.

8. Registrierungsknoten nach Anspruch 7, wobei
die Knotenressourcen-Löschanfrage einen Knotenersatzhinweis, die AE-Identität oder die CSE-Identität umfasst; und
das Ressourcenverwaltungsmodul weiter dazu eingerichtet ist, der AE oder der CSE eine Ersatz-Knotenidentität zuzuweisen und der AE oder der CSE die Ersatz-Knotenidentität zurückzugeben, wobei die Ersatz-Knotenidentität der AE-Identität oder der CSE-Identität entspricht.

9. Registrierungsknoten nach Anspruch 8, wobei
das Ressourcenverwaltungsmodul weiter dazu eingerichtet ist, wenn es eine Knotenressourcen-Erstellungsanfrage zum Anfragen einer Ressource für einen neuen Anwendungsknoten oder einen neuen Zwischenknoten von der AE oder der CSE nach Zurückgeben der Ersatz-Knotenidentität an die AE oder die CSE empfängt, eine neue Knotenressource für den neuen Anwendungsknoten oder den neuen Zwischenknoten zu erstellen, und eine entsprechende AE-Ressource oder CSE-Ressource gemäß der Ersatz-Knotenidentität zu finden, wobei die Knotenressourcen-Erstellungsanfrage die Ersatz-Knotenidentität, die Knotenidentität und den Typ der Ressource, die erstellt werden soll, umfasst.

10. Registrierungsknoten nach einem der Ansprüche 6 bis 9, wobei
das Ressourcenzuordnungsmodul dazu eingerichtet ist, die Zuordnungsbeziehung zwischen der AE-Ressource, die für die AE erstellt wurde, und der aktuell erstellten Knotenressource in der folgenden Weise herzustellen:
Herstellen der Zuordnungsbeziehung zwischen der AE-Ressource, deren Attribut die AE-Identität umfasst, und der aktuell erstellten Knotenressource; und
das Ressourcenzuordnungsmodul dazu eingerichtet ist, die Zuordnungsbeziehung zwischen der CSE-Ressource, die für die CSE erstellt wurde, und der aktuell erstellten Knotenressource in der folgenden Weise herzustellen:
Herstellen der Zuordnungsbeziehung zwischen der CSE-Ressource, deren Attribut die CSE-Identität umfasst, und der aktuell erstellten Knotenressource.

11. Computerspeichermedium, in dem eine computerausführbare Anweisung gespeichert ist, wobei die computerausführbare Anweisung dazu eingerichtet ist, das Verfahren nach einem der Ansprüche 1-5 auszuführen.

## Revendications

1. Procédé de gestion d'une ressource applicative, comprenant :
l'envoi, par une entité d'application, AE, ou une entité de services communs, CSE, d'une demande de création de ressource de noeud à une CSE d'enregistrement de l'AE ou de la CSE pour demander une ressource pour un noeud d'application où est située l'AE ou un noeud intermédiaire où est située la CSE, dans lequel la demande de création de ressource de noeud comprend une identité d'AE de l'AE ou une identité de CSE de la CSE, une identité de noeud et un type de la ressource à créer (S201) ; et
la création, par la CSE d'enregistrement, d'une ressource de noeud pour le noeud d'application ou le noeud intermédiaire, **caractérisé en ce que** le procédé comprend en outre :
l'établissement, par la CSE d'enregistrement, d'une relation d'association entre une ressource d'AE qui a été créée pour l'AE et la ressource de noeud en cours de création, ou l'établissement, par la CSE d'enregistrement, d'une relation d'association entre une ressource de CSE qui a été créée pour la CSE et la ressource de noeud en cours de création, dans lequel un attribut de la ressource d'AE comprend l'identité de l'AE et un attribut de la ressource de CSE comprend l'identité de la CSE (S202) ;
dans lequel l'établissement de la relation d'association entre la ressource d'AE et la ressource de noeud en cours de création (S202, S207) comprend : la fixation d'une valeur d'un attribut de « connexion de noeud » de la ressource d'AE comme étant l'identité du noeud ou une adresse de la ressource de noeud en cours de création ; et
l'établissement de la relation d'association entre la ressource de CSE et la ressource de noeud en cours de création (S202, S207) comprend : la fixation d'une valeur d'un attribut de « connexion de noeud » de la ressource de CSE comme étant l'identité du noeud ou une adresse de la ressource de noeud en cours de création.

2. Procédé selon la revendication 1, comprenant en outre :
après l'envoi, par l'AE ou la CSE, de la demande de création de ressource de noeud à la CSE d'enregistrement pour demander la ressource pour le noeud d'application ou le noeud intermédiaire, lorsque l'AE est située sur un nouveau noeud d'application ou la CSE est située sur un nouveau noeud intermédiaire en cas de remplacement de noeud, l'envoi, par l'AE ou la CSE, d'une demande de suppression de ressource de noeud à la CSE d'enregistrement (S203) ; et
la suppression, par la CSE d'enregistrement, de la ressource de noeud créée pour le noeud d'application ou le noeud intermédiaire et de la relation d'association (S204) ;
dans lequel la suppression, par la CSE d'enregistrement, de la relation d'association (S204) comprend : la suppression d'un attribut de « connexion de noeud » de la ressource d'AE ou de la ressource de CSE, ou la fixation d'une valeur de l'attribut de « connexion de noeud » de la ressource d'AE ou de la ressource de CSE comme étant nulle.

3. Procédé selon la revendication 2, dans lequel la demande de suppression de ressource de noeud comprend une indication de remplacement de noeud, l'identité de l'AE ou l'identité de la CSE ; et
le procédé comprend en outre :
outre la suppression de la ressource de noeud créée pour le noeud d'application ou le noeud intermédiaire et de la relation d'association (S204), l'affectation en outre, par la CSE d'enregistrement, d'une identité de noeud de remplacement à l'AE ou à la CSE, et le renvoi, par la CSE d'enregistrement, de l'identité du noeud de remplacement à l'AE ou à la CSE, dans lequel l'identité du noeud de remplacement correspond à l'identité de l'AE ou à l'identité de la CSE (S205).

4. Procédé selon la revendication 3, comprenant en outre :
après le renvoi, par la CSE d'enregistrement, de l'identité du noeud de remplacement à l'AE ou à la CSE (S205), l'envoi, par l'AE ou la CSE, d'une demande de création de ressource de noeud à la CSE d'enregistrement pour demander une ressource pour le nouveau noeud d'application ou le nouveau noeud intermédiaire, dans lequel la demande de création de ressource de noeud comprend l'identité du noeud de remplacement, l'identité du noeud et le type de la ressource à créer (S206) ; et
la création, par la CSE d'enregistrement, d'une nouvelle ressource de noeud pour le nouveau noeud d'application ou le nouveau noeud intermédiaire, la recherche, par la CSE d'enregistrement, d'une ressource d'AE ou d'une ressource de CSE correspondante selon l'identité du noeud de remplacement, et l'établissement, par la CSE d'enregistrement, d'une relation d'association entre la ressource d'AE et la ressource de noeud en cours de création, ou l'établissement, par la CSE d'enregistrement, d'une relation d'association entre la ressource de CSE et la ressource de noeud en cours de création (S207).

5. Procédé selon l'une quelconque des revendications 1 à 4, dans lequel
l'établissement de la relation d'association entre la ressource d'AE et la ressource de noeud en cours de création (S202, S207) comprend :
l'établissement de la relation d'association entre la ressource d'AE dont l'attribut comprend l'identité de l'AE et la ressource de noeud en cours de création ; et
l'établissement de la relation d'association entre la ressource de CSE et la ressource de noeud en cours de création (S202, S207) comprend :
l'établissement de la relation d'association entre la ressource de CSE dont l'attribut comprend l'identité de la CSE et la ressource de noeud en cours de création.

6. Noeud d'enregistrement pour la gestion d'une ressource applicative, comprenant : un module de gestion des ressources et un module d'association des ressources, dans lequel
le module de gestion des ressources est conçu, après réception d'une demande de création de ressource de noeud envoyée par une entité d'application, AE, ou une entité de services communs, CSE, pour créer une ressource de noeud pour un noeud d'application où est située l'AE ou un noeud intermédiaire où est située la CSE, dans lequel la demande de création de ressource de noeud comprend une identité d'AE de l'AE ou une identité de CSE de la CSE, une identité de noeud et un type de la ressource à créer ; **caractérisé en ce que**
le module d'association des ressources est conçu pour établir une relation d'association entre une ressource d'AE qui a été créée pour l'AE et la ressource de noeud en cours de création, ou pour établir une relation d'association entre une ressource de CSE qui a été créée pour la CSE et la ressource de noeud en cours de création, dans lequel un attribut de la ressource d'AE comprend l'identité de l'AE et un attribut de la ressource de CSE comprend l'identité de la CSE ;
dans lequel le module d'association des ressources est conçu pour établir la relation d'association entre la ressource d'AE qui a été créée pour l'AE et la ressource de noeud en cours de création de la manière suivante : en fixant une valeur d'un attribut de « connexion de noeud » de la ressource d'AE comme étant l'identité du noeud ou une adresse de la ressource de noeud en cours de création ; et
le module d'association des ressources est conçu pour établir la relation d'association entre la ressource de CSE et la ressource de noeud en cours de création de la manière suivante : en fixant une valeur d'un attribut de « connexion de noeud » de la ressource de CSE comme étant l'identité du noeud ou une adresse de la ressource de noeud en cours de création.

7. Noeud d'enregistrement selon la revendication 6, dans lequel
le module de gestion des ressources est conçu en outre, lors de la réception d'une demande de suppression de ressource de noeud de l'AE ou de la CSE après réception de la demande de création de ressource de noeud envoyée par l'AE ou la CSE, pour supprimer la ressource de noeud créée pour le noeud d'application ou le noeud intermédiaire et la relation d'association ;
dans lequel le module de gestion des ressources est conçu pour supprimer la relation d'association de la manière suivante : en supprimant un attribut de « connexion de noeud » de la ressource d'AE ou de la ressource de CSE, ou en fixant une valeur de l'attribut de « connexion de noeud » de la ressource d'AE ou de la ressource de CSE comme étant nulle.

8. Noeud d'enregistrement selon la revendication 7, dans lequel
la demande de suppression de ressource de noeud comprend une indication de remplacement de noeud, l'identité de l'AE ou l'identité de la CSE ; et
le module de gestion des ressources est conçu en outre pour affecter une identité de noeud de remplacement à l'AE ou à la CSE, et pour renvoyer l'identité du noeud de remplacement à l'AE ou à la CSE, dans lequel l'identité du noeud de remplacement correspond à l'identité de l'AE ou à l'identité de la CSE.

9. Noeud d'enregistrement selon la revendication 8, dans lequel
le module de gestion des ressources est conçu en outre, lors de la réception d'une demande de création de ressource de noeud demandant une ressource pour un nouveau noeud d'application ou un nouveau noeud intermédiaire de l'AE ou de la CSE après renvoi de l'identité du noeud de remplacement à l'AE ou à la CSE, pour créer une nouvelle ressource de noeud pour le nouveau noeud d'application ou le nouveau noeud intermédiaire, et pour rechercher une ressource d'AE ou une ressource de CSE correspondante selon l'identité du noeud de remplacement, dans lequel la demande de création de ressource de noeud comprend l'identité du noeud de remplacement, l'identité du noeud et le type de la ressource à créer.

10. Noeud d'enregistrement selon l'une quelconque des revendications 6 à 9, dans lequel
le module d'association des ressources est conçu pour établir la relation d'association entre la ressource d'AE qui a été créée pour l'AE et la ressource de noeud en cours de création de la manière suivante :
en établissant la relation d'association entre la ressource d'AE dont l'attribut comprend l'identité de l'AE et la ressource de noeud en cours de création ; et
le module d'association des ressources est conçu pour établir la relation d'association entre la ressource de CSE qui a été créée pour la CSE et la ressource de noeud en cours de création de la manière suivante :
en établissant la relation d'association entre la ressource de CSE dont l'attribut comprend l'identité de la CSE et la ressource de noeud en cours de création.

11. Support de stockage informatique dans lequel est stockée une instruction exécutable par ordinateur, l'instruction exécutable par ordinateur étant conçue pour exécuter le procédé selon l'une quelconque des revendications 1 à 5.
